# EUROPÄISCHE PATENTSCHRIFT

(11) **EP 0 543 043 B1**
(45) Veröffentlichungstag und Bekanntmachung des Hinweises auf die Patenterteilung: **03.05.1995**
(21) Anmeldenummer: 91119837.2
(22) Anmeldetag: 21.11.1991
(51) Int. Cl.: B60R 22/44

(54) **Gurtaufroller mit Zugentlastung für Sicherheitsgurt-Rückhaltesysteme in Fahrzeugen**
Belt retractor with strain relief for safety belt restraint systems for vehicles
Rétracteur de sangle avec soulagement de traction pour systèmes de retenue par ceinture de sécurité pour véhicules

(43) Veröffentlichungstag der Anmeldung: 26.05.1993
(73) Patentinhaber: TRW Occupant Restraint Systems GmbH, 73553 Alfdorf (DE)
(72) Erfinder: Kopetzky,Robert, W-7075 Mutlangen (DE)
(74) Vertreter: Degwert, Hartmut, Dipl.-Phys.

(56) Entgegenhaltungen:
- EP-A- 0 315 900
- DE-C- 3 838 175
- DE-U- 8 906 305
- GB-A- 2 217 180
- US-A- 4 303 208
- US-A- 4 993 657

## Beschreibung

Die Erfindung betrifft einen Gurtaufroller mit Zugentlastung für Sicherheitsgurt-Rückhaltesysteme in Fahrzeugen, mit einer zwischen einem gehäusefesten Teil und der das Gurtband aufnehmenden Gurtspule wirksamen Aufrollfeder, deren erstes Ende an dem gehäusefesten Teil angreift, mit einem in den Kraftfluß zwischen Aufrollfeder und Gurtspule eingefügten, drehbar gelagerten Klinkenrad, woran das zweite Ende der Aufrollfeder triebschlüssig angeschlossen ist, mit einer schwächer als die Aufrollfeder dimensionierten, spiralförmigen Hilfsfeder, die ihrerseits zwischen dem Klinkenrad und der Gurtspule wirksam ist, wobei das Klinkenrad mit einer Klinke zusammenwirkt, die in Abhängigkeit von einem Steuerkriterium die Drehbewegung des Klinkenrades sperrt oder freigibt, und mit einer Bremseinrichtung zur Bedämpfung des Spannvorgangs der Hilfsfeder durch die Aufrollfeder.

Ein solcher Gurtaufroller ist aus der DE-C 38 38 175 (EP-A-371288) bekannt und dient zur Erhöhung des Tragekomforts des Gurtes. Bei gesperrtem Klinkenrad ist der durch den angelegten Gurt auf den Fahrzeuginsassen ausgeübte Druck gering, da er nur durch die schwächer als die Aufrollfeder dimensionierte Hilfsfeder bestimmt wird. Sobald diese sogenannte Komfortstellung durch Freigabe des Klinkenrades aufgehoben wird, zieht die stärkere Aufrollfeder die Windungen der Hilfsfeder in Anlage zueinander und wirkt allein auf die Gurtspule, um das Gurtband vollständig und zuverlässig aufzurollen.

Die Bremseinrichtung verhindert, daß die Windungen der Hilfsfeder nach Freigabe des Klinkenrades unter Stoßbeanspruchung und Geräuschentwicklung abrupt aufeinanderprallen. Wenn die Hilfsfeder "auf Block gezogen", d.h. vollständig gespannt ist, ist die Bremseinrichtung inaktiv, damit die normale Funktion des Gurtaufrollers nicht beeinträchtigt wird. Die Aktivierung beziehungsweise Inaktivierung der Bremseinrichtung erfolgt in Abhängigkeit vom Spannungszustand der Hilfsfeder, die an ihrem Außenumfang abgetastet wird.

Wegen der Bedämpfung der Hilfsfeder erfolgt die Bewegung des Gurtbandes in der Komfortstellung reibungsbehaftet. Diese Reibung beeinträchtigt den angestrebten Tragekomfort insofern, als die Kraft zur Überwindung dieser Reibung beim Gurtabzug zusätzlich zu der zur Spannung der Hilfsfeder benötigten Kraft überwunden werden muß. Andererseits wird die Spannkraft der Hilfsfeder beim Gurteinzug in der Komfortstellung um die Reibungskraft vermindert, so daS einer Verringerung der wirkenden Kräfte Grenzen gesetzt sind, wenn die sichere Aufrollfunktion des Gurtaufrollers in der Komfortstellung nicht beeinträchtigt werden soll.

Der Erfindung liegt die Aufgabe zugrunde, einen Gurtaufroller der eingangs beschriebenen Art dahingehend weiterzubilden, daS die Bewegung des Gurtbandes in der Komfortstellung des Gurtaufrollers reibungsfrei erfolgt und der auf den Fahrzeuginsassen ausgeübte Druck weiter vermindert werden kann, wobei der Vorteil einer sanften und stoßfreien Umsteuerung zwischen verminderter und unverminderter Gurtspannung erhalten bleiben soll.

Diese Aufgabe wird bei einem gattungsgemäßen Gurtaufroller erfindungsgemäß dadurch gelöst, daß das zweite Ende der Aufrollfeder an einer Federaufnahme angreift, die relativ zu dem Klinkenrad begrenzt verdrehbar und mit diesem über eine in Umfangsrichtung wirkende, vorgespannte Feder gekoppelt ist, daß die Bremseinrichtung durch Abfühlen der Relativdrehung zwischen Federaufnahme und Klinkenrad aktivierbar ist und daß die Bremseinrichtung eine Reibungsbremse ist, die zwischen der Federaufnahme und einem an die Gurtspule angeschlossenen Teil selektiv aktivierbar ist und im aktivierten Zustand die Relativdrehung zwischen Gurtspule und Federaufnahme durch Reibung bedämpft.

Die Bremseinrichtung dieses Gurtaufrollers ist nur dann aktiv, wenn das Klinkenrad frei drehbar ist, also außerhalb der Komfortstellung. In Komfortstellung bei blockiertem Klinkenrad dreht sich die Federaufnahme um einen kleinen Drehwinkel gegenüber dem Klinkenrad, wodurch die Bremseinrichtung abgeschaltet wird. Bei Rückkehr zum Normalbetrieb wird die Hilfsfeder gegen die Reibungskraft der Bremseinrichtung sanft gespannt. Da die Bremseinrichtung lediglich die Funktion der Hilfsfeder bedämpft, wird der weitere Betrieb des Gurtaufrollers nicht beeinträchtigt.

Bei einer bevorzugten Ausführungsform ist an der Federaufnahme eine Kupplungsklinke schwenkbar gelagert; die Kupplungsklinke weist einen Betätigungsarm auf, an dem ein an dem Klinkenrad angeschlossener Mitnehmer angreift. Die Kupplungsklinke wirkt mit einem außenverzahnten Kupplungsrad zusammen, an welches ein mit dem an die Gurtspule angeschlossenen Teil in Reibungseingriff stehendes Reibungselement drehfest angeschlossen ist. Diese Ausführungsform zeichnet sich durch besondere konstruktive Einfachheit der Bremseinrichtung und ihrer Betätigung aus. Sie ist in dem verfügbaren Bauraum leicht unterzubringen und benötigt nur wenige Einzelteile.

Bei der bevorzugten Ausführungsform überschreitet in einem Bereich zwischen vollständig und teilweise gespannter Hilfsfeder die Spannkraft der Aufrollfeder nicht die Summe aus der Spannkraft der Hilfsfeder und der Reibkraft der Reibungsbremse, so daß die Hilfsfeder niemals vollständig gespannt ist. Bei Umschaltung in die Komfortstellung steht die verminderte Aufrollkraft sofort zur Verfügung; es muß nicht erst eine beträchtliche Gurtbandlänge vom Aufroller abgezogen werden, um eine vollständig gespannte Hilfsfeder teilweise zu entspannen und so den Wirkungsbereich der Hilfsfeder in Abzugsrichtung zu verlagern. Überdies wird durch diese Maßnahme der Wirkungsbereich der Komfortfunktion auf einen größeren Drehwinkelbereich der Gurtspule ausgedehnt.

Weitere Merkmale und Vorteile der Erfindung ergeben sich aus der folgenden Beschreibung einer vorteilhaften Ausführungsform unter Bezugnahme auf die Zeichnung.
- Fig. 1: dient allgemein zur Erläuterung des Funktionsprinzips von Gurtaufrollern mit Zugentlastung;
- Fig. 2 und 3: dienen zur Erläuterung des Funktionsprinzips der beschriebenen Ausführungsform des Gurtaufrollers;
- Fig. 4: ist eine Explosionszeichnung einer Ausführungsform des Gurtaufrollers;
- Fig. 5: ist eine Seitenansicht der Bremseinrichtung eines zusammengebauten Gurtaufrollers nach Fig. 4; und
- Fig. 6: ist ein Teilschnitt dieses Gurtaufrollers entlang einer Linie VI-VI in Fig. 5.

Auf einer Gurtspule 2 des Gurtaufrollers mit Zugentlastung wird das Gurtband 4 aufgewickelt. Beim Abziehen des Gurtbandes 4 wird die Gurtspule 2 gegen die Wirkung zweier in Reihe geschalteter Spiralfedern 6 und 8 gedreht. Eine der Spiralfedern ist eine Aufrollfeder 6 mit relativ hoher Federkraft, die das automatische Auf- und Abrollen des Gurtbandes 4 gewährleistet. Die andere Spiralfeder ist eine schwächer dimensionierte Hilfsfeder 8, die das Gurtband 4 im Komfortbetrieb unter geringer Spannung hält. Im Normalbetrieb ist die Hilfsfeder 8 gespannt, da ihre Windungen durch die stärkere Aufrollfeder 6 vollständig zusammengezogen werden.

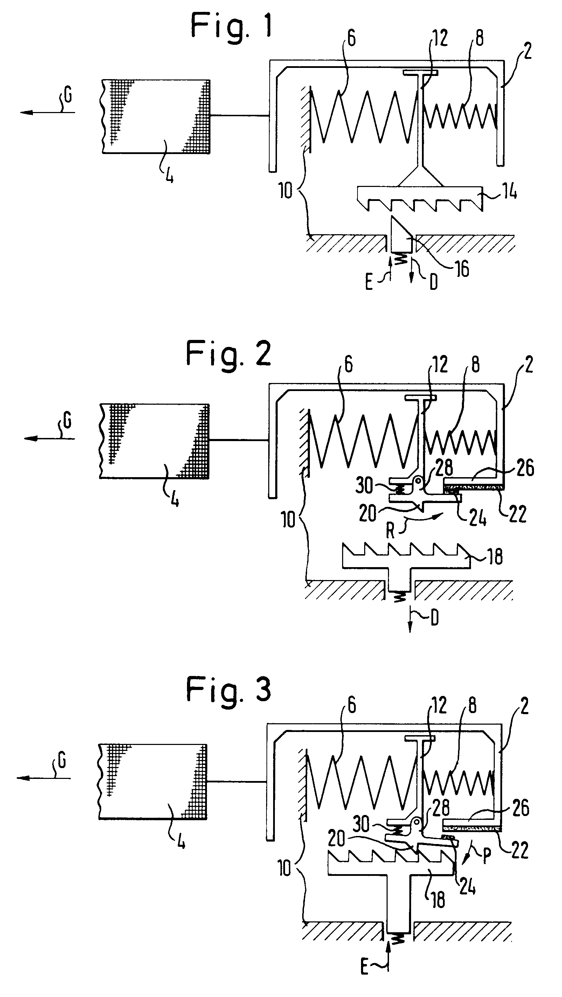

Um den prinzipiellen Aufbau und die Funktion des Gurtaufrollers anschaulich zu erläutern, sind seine wesentlichen Teile in den Fig. 1 bis 3 so gezeichnet, als ob sie linear beweglich wären. Das Gurtband 4 ist an die Gurtspule 2 gekoppelt. Die Gurtspule 2 ist bezüglich eines schematisch eingezeichneten Gehäuses 10 beweglich. An dem Gehäuse 10 ist ein Ende der Aufrollfeder 6 befestigt, deren anderes Ende an einer beweglichen Federaufnahme 12 angeschlossen ist. An der Federaufnahme 12 ist ein Ende der Hilfsfeder 8 angeschlossen, deren anderes Ende an der Gurtspule 2 angreift. Die Federaufnahme 12 weist in Fig. 1 eine Sperrverzahnung 14 auf. Eine Sperrklinke 16 ist an eine nicht eingezeichnete Umschaltvorrichtung angeschlossen, mittels welcher sie längs der Pfeile D und E zwischen einer in die Sperrverzahnung 14 eingreifenden Stellung und einer von der Sperrverzahnung 14 abgerückten Stellung verschiebbar ist. Die Umschaltvorrichtung hält die Sperrklinke 16 beispielsweise dann eingerückt, wenn das Gurtschloß des Sicherheitsgurtsystems geschlossen ist.

Wenn die Sperrklinke 16 von der Sperrverzahnung 14 abgerückt ist, hält die Aufrollfeder 6 die schwächere Hilfsfeder 8 und die Federaufnahme 12 in einer Stellung, in der die Windungen der Hilfsfeder 8 aneinander anliegen. Das Gurtband 4 wird selbsttätig allein durch die Wirkung der Aufrollfeder 6 entgegen der Gurtabzugsrichtung G gespannt, entsprechend dem normalen Betrieb des Gurtaufrollers. Wenn die Sperrklinke 16 in die Sperrverzahnung 14 eingerückt ist, wird die Federaufnahme 12 gehäusefest gehalten, so daß die Aufrollfeder 6 blockiert ist und nur die schwächere Hilfsfeder 8 das Gurtband 4 unter eine nunmehr verminderte Spannung setzt. Um diese Komfortfunktion in Gurtband-Abzugsrichtung auszudehnen, muß allerdings der Fahrzeuginsasse erst ein Stück Gurtband 4 abziehen, damit die vollständig gespannte Hilfsfeder 8 teilweise entspannt wird. Bei diesem Vorgang weicht die elastisch eingerückte Sperrklinke 16 aus, so daß beim Gurtbandabzug die Federmitnahme 12 in Abzugsrichtung verdreht wird.

Sobald die Sperrverzahnung 14 wieder freigegeben ist, wird die stärkere Aufrollfeder 6 wirksam und bewegt die Federaufnahme 12, bis die Windungen der Hilfsfeder 8 aneinander anliegen. Diese Windungen würden schlagartig unter Stoß- und Geräuschentwicklung aufeinanderprallen, wenn das Spannen der Hilfsfeder 8 nicht durch eine Bremseinrichtung bedämpft würde.

Bei dem in den Fig. 2 und 3 gezeigten, erfindungsgemäßen Gurtaufroller wirkt eine an der Federaufnahme 12 schwenkbar gelagerte Sperrklinke 20 mit einer Sperrverzahnung 18 zusammen.

Eine Bremseinrichtung ist durch eine Reibungskupplung mit zwei miteinander zusammenwirkenden Reibflächen 22 und 24 gebildet, von denen eine Reibfläche 22 mit der Gurtspule 2 und die andere Reibfläche 24 mit der Federaufnahme 12 verbunden ist. Bei dem in Fig. 2 gezeigten Zustand ist die Sperrverzahnung 18 von der Sperrklinke 20 in Richtung D abgerückt, und die Reibungskupplung hat keinerlei Auswirkung auf den normalen Betrieb des Gurtaufrollers. Sobald nämlich die Sperrklinke 20 frei ist, wird die Hilfsfeder 8 durch die Aufrollfeder 6 gespannt, wobei die Reibflächen 22 und 24 reibungsbehaftet aufeinander gleiten und das Spannen der Hilfsfeder 8 bedämpft wird. Anschließend wird die Gurtspule 2 allein und ungedämpft durch die Aufrollfeder 6 beaufschlagt.

Die Sperrklinke 20 ist an einem Kipphebel 28 gebildet, der schwenkbar an der Federaufnahme 12 gelagert und mit der Reibfläche 24 versehen ist. Der Kipphebel 28 wird durch eine an der Federaufnahme 12 abgestützte Druckfeder 30 in eine Richtung R (Fig. 2) beaufschlagt, um einen Reibschluß zwischen den Reibflächen 22 und 24 herzustellen. Wenn die Sperrverzahnung 18 in Richtung E eingerückt und die Sperrklinke 20 blockiert ist (Fig. 3), also die Komfortfunktion aktiv ist, wirkt die Federkraft der Aufrollfeder 6 auf den Kipphebel 28. Die Federkraft der Druckfeder 30 und die Hebelverhältnisse des Kipphebels 28 sind so gewählt, daß dann der Kipphebel 28 in einer Richtung P geschwenkt gehalten und die Reibfläche 24 von der Reibfläche 22 abgehoben ist. In dieser Stellung, in der nur die Hilfsfeder 8, nicht aber die Aufrollfeder 6 auf die Gurtspule 2 wirkt, ist der Reibschluß zwischen der Gurtspule 2 und der Federaufnahme 12 weggeschaltet, und die Gurtspule 2 ist ebenso wie im zuvor beschriebenen Normalbetrieb elastisch und ungedämpft beweglich. Es ist keine Reibung vorhanden, die sich störend auf das Rückzugsverhalten der Hilfsfeder 8 auswirken könnte. Daher kann die Hilfsfeder 8 schwach dimensioniert sein, um die Rückzugskräfte gering zu halten und so den Tragekomfort zu erhöhen.

Bei dem Gurtaufroller gemäß Fig. 2 und 3 sind die Aufrollfeder 6, die Hilfsfeder 8 und die Reibungskraft zwischen den Reibflächen 22 und 24 so abgestimmt, daß die Hilfsfeder 8 im Normalbetrieb nach Fig. 2 niemals vollständig gespannt ist. Nach Einrücken der Sperrklinke 20 gemäß Fig. 3 erstreckt sich der Wirkungsbereich der Hilfsfeder 8 daher auch in Abzugsrichtung des Gurtbandes, so daß der Komfortbereich in Abzugsrichtung ausgedehnt ist. Bei einem Gurtabzug über den Wirkungsbereich der Hilfsfeder 8 hinaus erfolgt der Übergang zwischen der Wirkung der Hilfsfeder 8 und der Aufrollfeder 6 stetig und stoßfrei. Der Komfortbereich ist nicht nur zweckmäßig verlagert, sondern auch effektiv größer als bei einem herkömmlichen Gurtaufroller.

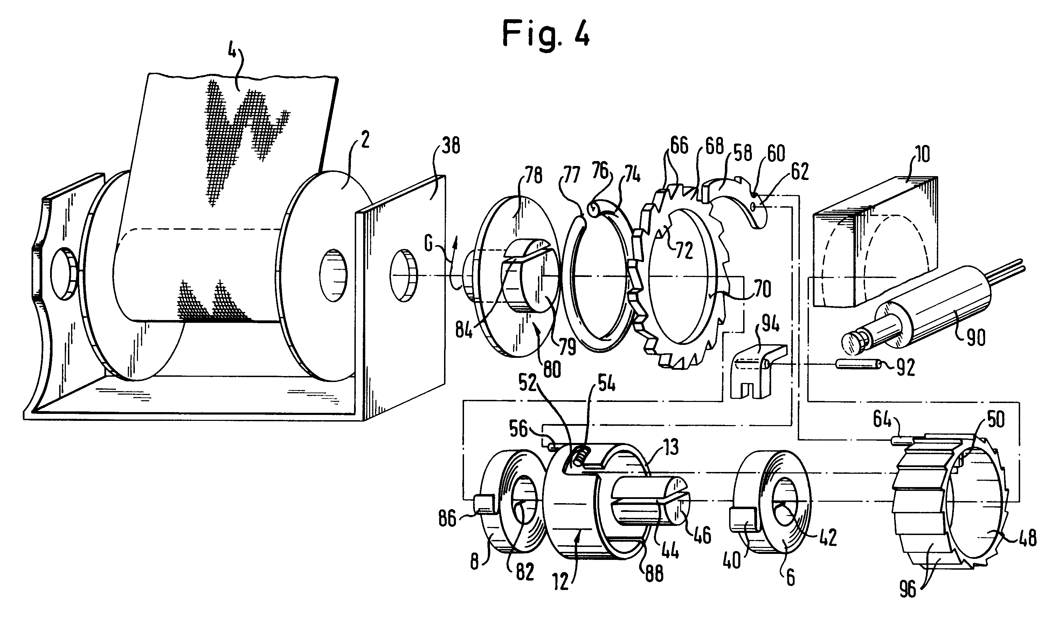

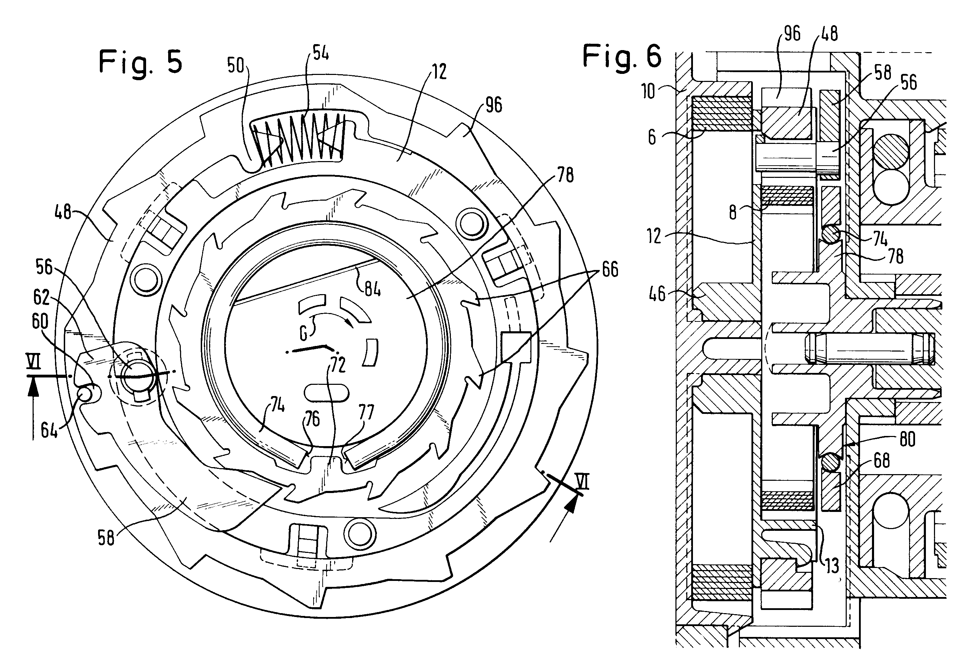

Im folgenden wird eine besonders zweckmäßige Ausführungsform anhand der Fig. 4 bis 6 beschrieben. Soweit die Elemente dieser Ausführungsform eine Entsprechung in Elementen der Fig. 1 bis 3 finden, sind gleiche Bezugszahlen verwendet.

Auf der Gurtspule 2 ist das Gurtband 4 teilweise aufgewickelt. Die Gurtspule 2 ist in einem Rahmen 38 drehbar gelagert. An dem Rahmen 38 ist ein Deckel 10 seitlich befestigt. In dem Deckel 10 befindet sich eine spiralförmige Aufrollfeder 6 aus federndem Bandmaterial. Ein äußeres, abgebogenes Ende 40 der Aufrollfeder 6 ist am Deckel 10 eingehängt. Ein inneres, abgebogenes Ende 42 ist in einem Mitnahmeschlitz 44 in einem axial seitlich abstehenden Zapfen 46 einer topfförmigen Federaufnahme 12 aufgenommen. Am äußeren Umfang der Federaufnahme 12 ist ein zylindrisches, am Außenumfang verzahntes Klinkenrad 48 drehbar gelagert. Ein nach innen vorspringender Zapfen 50 am Klinkenrad 48 ragt in eine in Umfangsrichtung verlaufende längliche Ausnehmung 52 an der Federaufnahme 12, die seitlich offen ist, um den Zusammenbau zu ermöglichen. Eine Druckfeder 54 erstreckt sich längs in der Ausnehmung 52 und stützt sich zwischen einem Ende der Ausnehmung 52 und dem Zapfen 50 ab. Auf einem am Umfang der Federaufnahme 12 in axialer Richtung vorspringenden Zapfen 56 ist eine Kupplungsklinke 58 schwenkbar gelagert. In einen Schlitz 60 eines radialen Betätigungsarms 62 der Kupplungsklinke 58 greift ein zapfenförmiger Mitnehmer 64, der von dem Klinkenrad 48 radial in bezug auf den Zapfen 56 nach außen versetzt axial vorspringt. Bei gestreckter Feder 54 taucht die Kupplungsklinke 58 zwischen zwei Zähne 66 eines außenverzahnten Kupplungsrades 68 ein. Das Kupplungsrad 68 weist eine im wesentlichen zylindrische Innenfläche 70 auf, von der aus ein Vorsprung 72 radial nach innen vorsteht. Im Inneren des Kupplungsrades 68 entlang seiner Innenfläche 70 erstreckt sich ein ringförmig gebogenes Reibungselement 74 mit zwei einander gegenüberliegenden Endflächen 76, 77. Der Vorsprung 72 des Kupplungsrades 68 ragt für eine drehfeste Kopplung mit dem Reibungselement 74 in die Lücke zwischen den Endflächen 76, 77. Das Reibungselement 74 ist unter Vorspannung auf einem scheibenförmigen Abschnitt 78 eines Teils 80 aufgesetzt und steht mit diesem in Reibungseingriff. Das Teil 80 ist drehfest axial mit der Gurtspule 2 verbunden und mit einer zylindrischen Nabe 79 versehen. Eine ähnlich wie die Aufrollfeder 6 gestaltete, aber schwächer dimensionierte Hilfsfeder 8 umgibt die zylindrische Nabe 79 des Teils 80 und weist ein inneres, abgewinkeltes Ende 82 auf, das in einem Schlitz 84 der Nabe 79 festgelegt ist. Die Hilfsfeder 8 ist ferner innerhalb der Federaufnahme 12 angeordnet und stützt sich im entspannten Zustand an der Innenseite eines zylindrischen Wandungsabschnitts 13 ab, der am Außenumfang eines radialen, scheibenförmigen Körpers der Federaufnahme 12 auf deren der Gurtspule 2 zugewandter Seite gebildet ist. Ein äußeres, abgewinkeltes Ende 86 der Hilfsfeder 8 ist in einem Schlitz 88 der Federaufnahme 12 festgelegt. Eine Umschaltvorrichtung 90, beispielsweise ein Elektromagnet, der durch ein elektrisches Signal vom Gurtschloß des Rückhaltesystems angesteuert wird, steht mit einer auf einer gehäusefesten Achse 92 gelagerten Klinke 94 in Wirkverbindung. Die Klinke 94 ist durch die Umschaltvorrichtung 90 in die Außenverzahnung 96 des Klinkenrades 48 einsteuerbar.

Im Normalbetrieb des Gurtaufrollers steht die Klinke 94 außer Eingriff mit dem Klinkenrad 48. Die relativ starke Aufrollfeder 6 zieht die relativ schwache Hilfsfeder 8 über die gemeinsam mit dem Klinkenrad 48 frei drehbare Federaufnahme 12 zusammen, und es entsteht eine quasi-starre Verbindung zwischen Gurtspule 2 und Aufrollfeder 6. Da keine äußere Kraft auf das Klinkenrad 48 wirkt, drückt die Feder 54 die Kupplungsklinke 58 in das Kupplungsrad 68. Die Bremseinrichtung aus Kupplungsrad 68, Reibungselement 76 und dem Außenumfang der Scheibe 78 des an die Gurtspule angeschlossenen Teils 80 ist zur Bedämpfung einer Relativdrehung zwischen der Gurtspule 2 und der Federaufnahme 12 wirksam. Eine Relativdrehung findet aber nicht statt, wenn die Hilfsfeder 8 bereits gespannt ist.

Im Komfortbetrieb ist das Klinkenrad 48 durch die Klinke 94 entgegen der Gurtabzugsrichtung G bezüglich des Gehäuses 2 blockiert. In der der Gurtabzugsrichtung G entgegengesetzten Richtung können die abgeschrägten Zähne 96 des Klinkenrades 48 beim Abziehen des Gurtbandes 4 an der Klinke 94 abgleiten, wodurch der Komfortbereich in Gurtabzugsrichtung verlagert wird. In der Komfortstellung hat die Aufrollfeder 6 keinen Einfluß mehr auf die Gurtspule 2, da sie beiderseits gehäusefest abgestützt ist. Die Hilfsfeder 8 übernimmt allein den Rückzug des Gurtbandes 4. Jetzt findet eine Relativdrehung zwischen Gurtspule 2 und Federaufnahme 12 statt. Die Reibungskupplung, die in diesem Fall stören würde, ist weggeschaltet, da die Aufrollfeder 6 die Druckfeder 54 zusammendrückt und die Federaufnahme 12 und das Klinkenrad 48 begrenzt relativ zueinander verdreht. Die an der Federaufnahme 12 gelagerte und mit dem Zapfen 64 des Klinkenrades 48 in Eingriff stehende Kupplungsklinke 58 hebt sich bei dieser Drehung von den Zähnen 66 des Kupplungsrades 68 ab. Das Kupplungsrad 68 kann sich frei mit dem Reibungselement 74, dem Teil 80 und der Gurtspule 2 drehen, da es von der Federaufnahme 12 entkoppelt ist.

Nach Umschalten in den Normalbetrieb wird das Klinkenrad 48 wieder frei, und die Druckfeder 54 bringt die Kupplungsklinke 58 in Eingriff mit dem Kupplungsrad 68, so daß eine Bremswirkung zwischen der Federaufnahme 12 und der Gurtspule 2 entsteht. Die Hilfsfeder 8 wird aufgrund der wirkenden Reibung sanft und ruckfrei durch die Aufrollfeder 6 gespannt, woraufhin der oben beschriebene Normalbetrieb wiederhergestellt ist.

## Patentansprüche

1. Gurtaufroller mit Zugentlastung für Sicherheitsgurt-Rückhaltesysteme in Fahrzeugen, mit einer zwischen einem gehäusefesten Teil (10) und der das Gurtband aufnehmenden Gurtspule (2) wirksamen Aufrollfeder (6), deren erstes Ende (40) an dem gehäusefesten Teil (10) angreift, mit einem in den Kraftfluß zwischen Aufrollfeder (6) und Gurtspule (2) eingefügten, drehbar gelagerten Klinkenrad (48), woran das zweite Ende (42) der Aufrollfeder (6) triebschlüssig angeschlossen ist, mit einer schwächer als die Aufrollfeder (6) dimensionierten, spiralförmigen Hilfsfeder (8), die ihrerseits zwischen dem Klinkenrad (48) und der Gurtspule (2) wirksam ist, wobei das Klinkenrad (48) mit einer Klinke (94) zusammenwirkt, die in Abhängigkeit von einem Steuerkriterium die Drehbewegung des Klinkenrades (48) sperrt oder freigibt, und mit einer Bremseinrichtung (74, 78) zur Bedämpfung des Spannvorgangs der Hilfsfeder (8) durch die Aufrollfeder (6), dadurch gekennzeichnet, daß das zweite Ende (42) der Aufrollfeder (6) an einer Federaufnahme (12) angreift, die relativ zu dem Klinkenrad (48) begrenzt verdrehbar und mit diesem über eine in Umfangsrichtung wirkende, vorgespannte Feder (54) gekoppelt ist, daß die Bremseinrichtung durch Abfühlen der Relativdrehung zwischen Federaufnahme (12) und Klinkenrad (48) aktivierbar ist und daß die Bremseinrichtung eine Reibungsbremse (22, 24; 74, 78) ist, die zwischen der Federaufnahme (12) und einem an die Gurtspule (2) angeschlossenen Teil (80) selektiv aktivierbar ist und im aktivierten Zustand die Relativdrehung zwischen Gurtspule (2) und Federaufnahme (12) durch Reibung bedämpft.

2. Gurtaufroller nach Anspruch 1, dadurch gekennzeichnet, daß an der Federaufnahme (12) eine Kupplungsklinke (58) schwenkbar gelagert ist, daß die Kupplungsklinke (58) einen Betätigungsarm (62) aufweist, an dem ein an dem Klinkenrad (48) angeschlossener Mitnehmer (64) angreift, und daß die Kupplungsklinke (58) mit einem außenverzahnten Kupplungsrad (68) zusammenwirkt, an welches ein mit dem an die Gurtspule (2) angeschlossenen Teil (80) in Reibungseingriff stehendes Reibungselement (74) drehfest angeschlossen ist.

3. Gurtaufroller nach einem der vorstehenden Ansprüche, dadurch gekennzeichnet, daß die Spannkraft der Aufrollfeder (6) die Summe aus der Spannkraft der Hilfsfeder (8) und der Reibkraft der Reibungsbremse (22, 24; 74, 78) in einem Bereich zwischen vollständig und teilweise gespannter Hilfsfeder (8) nicht übersteigt.

4. Gurtaufroller nach einem der vorstehenden Ansprüche, dadurch gekennzeichnet, daß die Federaufnahme (12) einen scheibenförmigen radialen Körper aufweist, der auf seiner der Gurtspule (2) zugewandten Seite an seinem Außenumfang mit einem zylindrischen Wandungsabschnitt versehen ist, welcher die Hilfsfeder (8) umgibt und auf dem das Klinkenrad (48) drehbar gelagert ist.

5. Gurtaufroller nach einem der vorstehenden Ansprüche, dadurch gekennzeichnet, daß das an die Gurtspule angeschlossene Teil (80) eine radiale Scheibe (78) trägt, deren Außenumfang mit einem ringförmigen Reibungselement (74) in Reibungseingriff steht, welches drehfest an das Kupplungsrad (68) angeschlossen ist.

6. Gurtaufroller nach Anspruch 5, dadurch gekennzeichnet, daß das Kupplungsrad (68) ringförmig ausgebildet ist und das ringförmige Reibungselement (74) umgibt sowie mit einem radial einwärts gerichteten Vorsprung versehen ist, der zwischen zwei einander in Umfangsrichtung gegenüberliegende Enden (76, 77) des ringförmigen Reibungselements (74) greift.

## Claims

1. Belt retractor with tension relief for safety belt restraining systems in vehicles, comprising a retracting spring (6) which is effective between a housing-fixed member (10) and the belt spool (2) receiving the webbing and the first end (40) of which engages the housing-fixed member (10), a rotatably mounted ratchet wheel (48) which is inserted into the force line between retracting spring (6) and belt spool (2) and to which the second end (42) of the retracting spring (6) is drivingly connected, a spiral auxiliary spring (8) which is weaker than the retracting spring (6) and which in turn is effective between the ratchet wheel (48) and the belt spool (2), the ratchet wheel (48) cooperating with a pawl (94) which in dependence upon a control criterion blocks or releases the rotational movement of the ratchet wheel (48), and a brake means (77, 78) for damping the tensioning operation of the auxiliary spring (8) by the retracting spring (6), characterized in that the second end (42) of the retracting spring (6) engages a spring receiver (12) which is limitedly rotatable relatively to the ratchet wheel (48) and is coupled to the latter via a pretensioned spring (54) acting in the peripheral direction, that the brake means is activatable by sensing of the relative rotation between the spring receiver (12) and ratchet wheel (48) and that the brake means is a friction brake (22, 24; 74, 78) which is selectively activatable between the spring receiver (12) and a member (80) connected to the belt spool (2) and in the activated state dampens by friction the relative rotation between the belt spool (2) and spring receiver (12).

2. Belt retractor according to claim 1, characterized in that a coupling pawl (58) is pivotally mounted on the spring receiver (12), that the coupling pawl (58) comprises an actuating arm (62) on which a driver (64) connected to the ratchet wheel (48) engages, and that the coupling pawl (58) cooperates with an externally toothed coupling wheel (68) to which a friction element (74) in frictional engagement with the member (80) connected to the belt spool (2) is non-rotatably connected.

3. Belt retractor according to any one of the preceding claims, characterized in that the tension force of the retracting spring (6) does not exceed the sum of the tension force of the auxiliary spring (8) and the frictional force of the friction brake (22, 24; 74, 78) in a range between completely and partially tensioned auxiliary spring (8).

4. Belt retractor according to any one of the preceding claims, characterized in that the spring receiver (12) comprises a disc-shaped radial body which on its side facing the belt spool (2) is provided at its outer periphery with a cylindrical wall section which surrounds the auxiliary spring (8) and is rotatably mounted on the ratchet wheel (48).

5. Belt retractor according to any one of the preceding claims, characterized in that the member (80) connected to the belt spool carries a radial disc (78), the outer periphery of which is in frictional engagement with an annular friction element (74) which is connected nonrotatably to the coupling wheel (68).

6. Belt retractor according to claim 5, characterized in that the coupling wheel (68) is made annular and surrounds the annular friction element (74) and is provided with a radially inwardly directed projection which engages between two ends (76, 77) of the annular friction element (74) lying opposite each other in the peripheral direction.

## Revendications

1. Enrouleur de ceinture à relâchement de la traction pour systèmes de retenue de ceinture de sécurité dans des véhicules, comprenant un ressort d'enroulement (6) agissant entre une pièce (10) solidaire du boîtier et la bobine (2) sur laquelle s'enroule la sangle de la ceinture, la première extrémité (40) dudit ressort d'enroulement agissant sur la pièce (10) solidaire du boîtier, ledit enrouleur comprenant par ailleurs une roue à rochet (48) montée rotative, insérée dans le flux de force entre le ressort d'enroulement (6) et la bobine (2) de la ceinture et à laquelle la seconde extrémité (42) du ressort d'enroulement (6) est raccordée de manière à l'entraîner, un ressort auxiliaire (8) en spirale dimensionné plus faiblement que le ressort d'enroulement (6) et qui est actif de son côté entre la roue à rochet (48) et la bobine (2) de la ceinture, la roue à rochet (48) coopérant avec un cliquet (94) qui bloque ou libère le mouvement de rotation de la roue à rochet (48) en fonction d'un critère de commande, et un dispositif de freinage (77, 78) destiné à amortir le processus de mise sous tension du ressort auxiliaire (8) par le ressort d'enroulement (6), caractérisé en ce que la seconde extrémité (42) du ressort d'enroulement (6) agit sur un barillet (12) qui est rotatif entre certaines limites par rapport à la roue à rochet (48) et qui est couplé à cette dernière par un ressort sous précontrainte (54) qui agit dans la direction de la circonférence, en ce que le dispositif de freinage est activable par détection de la rotation relative entre le barillet (12) et la roue à rochet (48) et en ce que le dispositif de freinage est un frein à friction (22, 24 ; 74, 78) qui est sélectivement activable entre le barillet (12) et une pièce (80) reliée à la bobine (2) de la ceinture et qui, lorsqu'il est à l'état d'activation, amortit par frottement la rotation relative entre la bobine (2) de la ceinture et le barillet (12).

2. Enrouleur de ceinture selon la revendication 1, caractérisé en ce qu'un cliquet d'accouplement (58) est monté pivotant sur le barillet (12), en ce que le cliquet d'accouplement (58) comporte un bras d'actionnement (62) sur lequel agit un toc d'entraînement (64) solidaire de la roue à rochet (48), et en ce que le cliquet d'accouplement (58) coopère avec une roue d'accouplement (68) à denture extérieure avec laquelle un élément de friction (74) en prise par frottement avec la pièce (80) reliée à la bobine (2) de la ceinture est solidarisé en rotation.

3. Enrouleur de ceinture selon l'une des revendications précédentes, caractérisé en ce que la force de tension du ressort d'enroulement (6) ne dépasse pas la somme de la force de tension du ressort auxiliaire (8) et de la force de frottement du frein à friction (22, 24 ; 74, 78) dans une plage comprise entre la tension totale et une tension partielle du ressort auxiliaire (8).

4. Enrouleur de ceinture selon l'une des revendications précédentes, caractérisé en ce que le barillet (12) comprend un corps radial discoïdal équipé à la circonférence extérieure, sur le côté tourné vers la bobine (2) de la ceinture, d'un élément cylindrique de cloison qui entoure le ressort auxiliaire (8) et sur lequel la roue à rochet (48) est montée rotative.

5. Enrouleur de ceinture selon l'une des revendications précédentes, caractérisé en ce que la pièce (80) reliée à la bobine de la ceinture supporte un disque radial (78) dont la circonférence extérieure est en prise par frottement avec un élément annulaire de friction (74) qui est solidarisé en rotation avec la roue d'accouplement (68).

6. Enrouleur de ceinture selon la revendication 5, caractérisé en ce que la roue d'accouplement (68) est annulaire et entoure l'élément annulaire de friction (74) et de plus elle comporte une protubérance orientée radialement vers l'intérieur et qui se loge entre deux extrémités (76, 77) de l'élément annulaire de friction (74) qui sont en face l'une de l'autre dans la direction de la circonférence.
